# EUROPÄISCHE PATENTSCHRIFT

(11) **EP 1 583 822 B1**
(45) Veröffentlichungstag und Bekanntmachung des Hinweises auf die Patenterteilung: **05.10.2011**
(21) Anmeldenummer: 03815074.4
(22) Anmeldetag: 24.12.2003
(51) Int. Cl.: C12N 1/04, C12N 9/96, C12N 9/78, C12N 9/88

(54) **VERFAHREN ZUR KONSERVIERUNG UND/ODER LAGERUNG VON ZELLEN MIT NITRILASE ODER NITRILHYDRATASE-AKTIVITÄT**
METHODS FOR PRESERVING AND/OR STORING CELLS HAVING A NITRILASE OR NITRILE HYDRATASE ACTIVITY
PROCEDE POUR CONSERVER ET/OU STOCKER DES CELLULES AYANT UNE ACTIVITE DE NITRILASE OU DE NITRILHYDRATASE

(30) Priorität: 08.01.2003 DE 10300500
(43) Veröffentlichungstag der Anmeldung: 12.10.2005
(73) Patentinhaber: BASF SE, 67056 Ludwigshafen (DE)
(72) Erfinder: ZELINSKI, Thomas, 67271 Neuleiningen (DE); KESSELER, Maria, 68167 Mannheim (DE); HAUER, Bernhard, 67136 Fussgönheim (DE)
(86) Internationale Anmeldenummer: PCT/EP2003/014880
(87) Internationale Veröffentlichungsnummer: WO 2004/063357

(56) Entgegenhaltungen:
- DE-A- 19 848 129
- US-A- 3 779 869
- US-A- 4 900 672
- US-A- 4 950 596

## Beschreibung

Die Erfindung betrifft Verfahren zur Konservierung und/oder Lagerung von Mikroorganismen, die mindestens eine Nitrilase-Enzymaktivität aufweisen, wobei die Konservierung und/oder Lagerung in einem wässrigen Medium erfolgt, welches mindestens einen Aldehyd umfasst, wobei die Gesamtaldehydkonzentration in einem Bereich von 0, 1 bis 100 mM/l liegt und wobei der Aldehyd durch die allgemeine Formel III beschrieben ist: 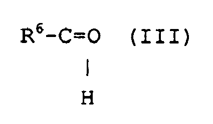 wobei R⁶ substituiertes oder unsubstituiertes, verzweigtes oder unverzweigtes C1-C10-Alkyl-, C2-C10-Alkenyl-, substituiertes oder unsubstituiertes Aryl- oder Hetaryl- sein kann.

Durch Mikroorganismen hergestellte Enzyme finden als Biokatalysatoren zunehmend Anwendung in chemischen Produktionsverfahren. Insbesondere die enzymatische Hydrolyse von Nitrilen zu Amiden, Carbonsäuren oder α-Hydroxycarbonsäuren ist ein Verfahren von hoher wirtschaftlicher Bedeutung. Nitril-hydrolysierende Enzyme lassen sich in die Familie der Nitrilhydratasen und die Nitrilasen unterteilen. Nitrilhydratasen und Nitrilasen besitzen im aktiven Zentrum ein Cysteinmolekül das für die Katalyse essentiell ist (Levy-Schil (1995) Gene 161:15-20). Die Nitrilhydratasen katalysieren die Addition von einem Moläquivalent Wasser zu den entsprechenden Amiden. Nitrilasen katalysieren die Addition von zwei Moläquivalenten Wasser zu den entsprechenden Carbonsäuren. In der Regel bewirken besagte Enzyme eine optisch-selektive Hydratation bzw. Hydrolyse, was zu optisch-aktiven (chiralen) Produkten führt. Chirale Carbonsäuren sind gesuchte Verbindungen für die organische Synthesechemie. Sie sind Ausgangsprodukte für eine Vielzahl von pharmazeutischen Wirkstoffen oder Wirkstoffen für den Pflanzenschutz. Chirale Carbonsäuren können zur klassischen Racematspaltung über Diastereomeresalze verwendet werden. So wird R-(-)- oder S-(-)-Mandelsäure beispielsweise zur Racematspaltung racemischer Amine eingesetzt. R-(-)-Mandelsäure wird außerdem als Zwischenprodukt bei der Synthese genutzt.

Üblicherweise werden für die enzymatischen Umsetzungen gereinigte oder teilgereinigte Enzyme, aber auch Mikroorganismen mit entsprechenden Enzymaktivitäten eingesetzt. Die Enzyme können natürlichen oder rekombinanten Ursprungs sein. In der Regel erfolgt die Herstellung (Expression) der Enzyme in einem der Umlagerung vorgelagerten Schritt. Dabei ist es wünschenswert, größere Enzymmengen herzustellen und je nach Bedarf indenkatalytischenProzess einzubringen. Dies macht jedoch eine Lagerung unter Erhalt der Enzymaktivität erforderlich. Kühlung und/oder Einfrieren sind dabei Standardverfahren. Einfrieren erfordert jedoch meist komplexe Gefrier/Tau-Verfahren und geht in der Regel mit einem gravierenden Verlust von Enzymaktivität einher. Kühlung im allgemeinen ist mit logistischem Aufwand und Energiekosten verbunden.

EP-A1 O 666 320 beschreibt ein Verfahren zur Herstellung von α-Hydroxysäuren/amiden aus dem korrespondierenden Nitril, wobei vor der Reaktion die verwendeten Mikroorganismen in Gegenwart von Natriumsulfit (1 M) und Phosphatpuffer (50 mM) inkubiert werden. Zudem kann während der Reaktion die Enzymaktivität durch Zugabe von Phosphit oder Hypophosphit weiter stabilisiert werden, wobei besagte Zusätze eine Komplexierung von freiem, enzym-inhibierenden Aldehyd bewirken. EP-A1 0 610 048 beschreibt ein mikrobielles Verfahren zur Herstellung von α-Hydroxysäuren, wobei die Enzymaktivität während der Reaktion durch Zugabe von Natriumsulfit stabilisiert wird, welches ebenfalls eine Komplexierung von freiem, enzym-inhibierenden Aldehyd bewirkt. Bei besagten Verfahren werden die Zusätze durchweg während der Umsetzung des Nitrils zugegeben. Verfahren zur Stabilisierung vor dem Einsatz in der Reaktion sind nicht offenbart.

Die typische Methode für die Erhaltung cystein-abhängiger Aktivitäten ist ein Zusatz von Dithiothreitol und/oder Mercaptoethanol und/oder Ethylendiamintetraessigsäure (Beispiel: Nitrilase aus Rhodococcus rhodochrous J1; Kobayashi M (1989) Eur J Biochem 182: 349-356).

Die Stabilisierung von Nitrilase aus Rhodococcus sp. ATCC 39484 wurde durch den Zusatz von Substrat (Benzonitril) erreicht (Stevenson DE (1992) Biotechnol Appl Biochem 15:283-302). Für Nitrilase aus Rhodococcus rhodochrous NCIB 11216 sind neben der Substratkonzentration ein basischer pH, die Temperatur und die Enzymkonzentration für die Geschwindigkeit der Stabilisierung verantwortlich (Harper BH (1976) Biochem Soc Trans 4:502-504; Harper BH (1977) Biochem J 165:309-319). Nachteilig ist hier, dass der Stabilisator durch das Enzym umgesetzt wird und so mit der Zeit seine Wirkung verliert.

Für die Nitrilase aus Rhodococcus rhodochrous J1 wurde der Zusatz von anorganischen Salzen (u.a. bis 20% (NH₄)₂SO₄) und Alkoholen (bis 50% Glycerin, 10% Ethanol) zur Stabilisierung der Enzymaktivität beschreiben (Nagasawa T (2000) Eur J Biochem 267:138-144).

Für die Nitrilase aus Alcaligenes faecalis JM3 wurde der Zusatz von 60% Ammoniumsulfat, 2M NaCl oder 30% Propandiol zur Stabilisierung der Enzymaktivität beschreiben (Nagasawa T (1990) Eur J Biochem 194:765-772).

EP-A1 0 707 061 beschreibt verfahren zur Stabilisierung von Nitrilase enthaltenen Zellen durch den Zusatz von anorganische Salzen (Phosphate, Borate, Sulfate, Sulfite, Hydrochloride) zum Lagerpuffer mit einer Konzentration von mindestens 100 mM bis zur Sättigungsgrenze.

US 4,931,391, EP-A1 0 243 967 und US 4,900,672 beschreiben die Stabilisierung einer Nitrilhydratase-Aktivität durch den Zusatz von Amiden oder Carbonsäuren (oder eine Kombination der Substanzen) zur Zellsuspension.

US 4,343,900 beschreibt ein Verfahren zur Produktion von Acrylamid aus Acrylnitril, wobei der Reaktionsmischung Alkalimetallcarbonate zugesetzt werden, um den Aktivitätsverlust beim Quellen der eingesetzten fixierten Zellen zu vermeiden.

US 6,251,646 und US 6,368,804 beschreiben Verfahren zur Stabilisierung von Nitrilaseaktivität-tragenden Mikroorganismen durch Zusatz von Ammonium-, Natrium- oder Kalium(hydrogen)carbonaten in Konzentrationen von mindestens 0,1 M bis zur Sättigungkonzentration.

Aldehyde werden aufgrund der reaktiven Aldehydgruppe als Enzym-inhibieren Substanzen eingestuft. Ihre inhibierende Wirkung auf Nitrilasen während des Produktionsprozesses wird in zahlreichen Veröffentlichungen hervorgehoben (EP-B1 0 773 297 B1, S.4 Absätze [0013] und [0025]; EP-B1 0 707 061 B1, S.2 Absatz [0005]; EP-B1 0 666 320, S.2 Absatz [0004] und dort zitierte Literaturstellen; EP-A2 0 486 289 S.2 Zeile 30 und dort zitierte Literaturstellen; Yamamoto (1992) J Ferm Technol 73:425-430, insbesondere S.429 letzter Absatz).

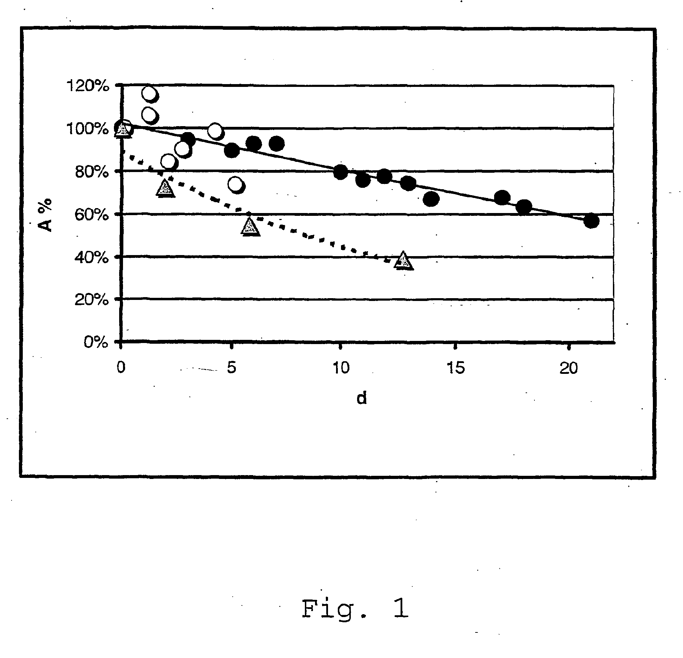

Die Deaktivierung der Nitrilase / Nitrilhydratase-Aktivität bei der Lagerung ist ein wesentlicher Kostenfaktor bei der industriellen Nutzung besagter Enzyme. Die Aktivität nimmt beispielsweise bei 4_C und pH 6,0 über einen Zeitraum von 6,6 Tagen um 36 % ab, was einen Aktivitätsverlust von 5,5 % pro Tag bedeutet (vgl. Fig. 1; Vergleichsversuch in Beispiel 3). Ein Aktivitätsverlust bei Nitrilasen kann z.B. auf einen Zerfall des Enzymmultimers in seine Monomere beruhen, die keine Nitrilaseaktivität besitzen (Nagasawa T (1990) Eur J Biochem 194:765-772). Die beschriebenen Verfahren sind nur sehr begrenzt in der Lage dieses Problem zu lösen. Zudem nutzen besagte Verfahren hohe Konzentrationen an Zusatzstoffen für eine Stabilisierung der Biokatalysatoren, die zudem nach Verwendung des Biokatalysators aufwendig abgetrennt und entsorgt werden müssen.

Die der Erfindung zugrunde liegende Aufgabe bestand demnach darin, ein Verfahren bereitzustellen, dass eine möglichst langanhaltende Stabilisierung einer Nitrilase -Aktivität ermöglicht ohne das Reaktionsgemisch mit unerwünschten Begleitstoffen zu kontaminieren.

Durch das erfindungsgemäße Verfahren wird diese Aufgabe gelöst.

Ein erster Schritt der Erfindung betrifft Verfahren zur Konservierung und/oder Lagerung von Mikroorganismen, die mindestens eine Nitrilase-Enzymaktivität aufweisen, wobei die Konservierung und/oder Lagerung in einem wässrigen Medium erfolgt, welches mindestens ein Aldehyd umfasst, wobei die Gesamtaldehydkonzentration in einem Bereich von 0,1 bis 100 mM/l liegt., wobei der Aldehyd durch die allgemeine Formel III beschrieben ist: 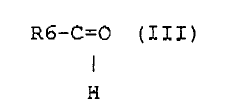 wobei R6 substituiertes oder unsubstituiertes, verzweigtes oder unverzweigtes C1-C10-Alkyl-, C2-C10-Alkenyl-, substituiertes oder unsubstituiertes Aryl- oder Hetaryl- sein kann.

Besagter Konservierungsschritt wird bevorzugt durchgeführt, bevor die Zellen mit einem Reaktanten, dessen Reaktion durch die Zellen zu katalysieren ist, versetzt werden. In einer bevorzugten Ausführungsform umfasst das wässrige Medium eine Gesamtkonzentration an Cyanidverbindungen ausgewählt aus der Gruppe bestehend aus Nitrilen, Blausäure und Cyanidsalzen, die maximal 10 Mol-% der Gesamtaldehykonzentration beträgt. In einer besonders bevorzugten Ausführungsform enthält das zur Konservierung und/oder Lagerung geeignete wässrige Medium keine Zusätze an besagten Cyanidverbindungen.

Der Begriff "Aldehyd" ist breit zu verstehen und umfasst sowohl aliphatische als auch aromatische Aldehyde. Erfindungsgemäß werden im folgenden im Zusammenhang mi dem erfindungsgemäßen Gegenstand unter dem Begriff "Aldehyd" Verbindungen der allgemeines Formel III: 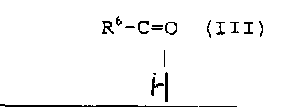 wobei R⁶ substituiertes oder unsubstituiertes, verzweigtes oder unverzweigtes C1-C10-Alkyl-, C2-C10-Alkenyl-, substituiertes oder unsubstituiertes Aryl- oder Hetaryl- sein kann verstanden. Besonders bevorzugt sind aromatische Aldehyde, ganz besonders bevorzugt unsubstituierter Benzaldehyd und substituierte Benzaldehyde, wie beispielsweise o-Chlorbenzaldehyd, m-Chlorbenzaldehyd, p-Chlorbenzaldehyd, o-Brombenzaldehyd, m-Brombenzaldehyd, p-Brombenzaldehyd, o-Methylbenzaldehyd, m-Methylbenzaldehyd, p-Methylbenzaldehyd.

Die konservierten/gelagerten Mikroorganismen können beispielsweise zur Umsetzung von racemischen Nitrilen der allgemeinen Formel (II) zu chiralen Carbonsäuren der allgemeinen Formel (Ia) oder chiralen Amiden der Allgemeinen Formel (Ib) eingesetzt werden: 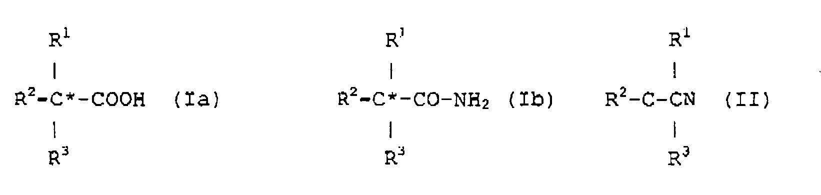 * ein optisch aktives Zentrum
- R¹, R², R³: unabhängig voneinander Wasserstoff, substituiertes oder unsubstituiertes, verzweigtes oder unverzweigtes C1-C10-Alkyl-, C2-C10-Alkenyl-, substituiertes oder unsubstituiertes Aryl-, Hetaryl-, OR⁴ oder NR⁴R⁵ und wobei die Reste R¹, R² und R³ immer unterschiedlich sind,
- R⁴: Wasserstoff, substituiertes oder unsubstituiertes, verzweigtes oder unverzweigtes C1-C10-Alkyl-, C2-C10-Alkenyl-, C1-C10-Alkylcarbonyl-, C2-C10-Alkenylcarbonyl-, Aryl-, Arylcarbonyl-, Hetaryl- oder Hetarylcarbonyl-,
- R⁵: Wasserstoff, substituiertes oder unsubstituiertes, verzweigtes oder unverzweigtes C1-C10-Alkyl-, C2-C10-Alkenyl-, Aryl- oder Hetaryl-.

Als Nitril am meisten bevorzugt sind Mandelonitril, o-Chlormandelonitril, p-Chlormandelonitril, m-Chlormandelonitril, o-Brommandelonitril, p-Brommandelonitril, m-Brommandelonitril, o-Methylmandelonitril, p-Methylmandelonitril oder m-Methylmandelonitril. Als chirale Carbonsäure sind am meisten bevorzugt R-Mandelsäure, S-Mandelsäure, R-p-Chlormandelsäure, m-Methylmandelonitril. Als chirale Carbonsäure sind am meisten bevorzugt R-Mandelsäure, S-Mandelsäure, R-p-Chlormandelsäure, S-p-Chlormandelsäure, R-m-Chlormandelsäure, S-m-Chlormandelsäure, R-o-Chlormandelsäure, S-o-Chlormandelsäure, S-o-Brommandelsäure, S-p-Brommandelsäure, S-m-Brommandelsäure, S-o-Methylmandelsäure, S-p-Methylmandelsäure, S-m-Methylmandelsäure, R-o-Brommandelsäure, R-p-Brommandelsäure, R-m-Brommandelsäure, R-o-Methylmandelsäure, R-p-Methylmandelsäure oder R-m-Methylmandelsäure.

Werden als Edukt für die angestrebte Nitrilase-katalysierte Umsetzung α-Hydroxynitrile der allgemeinen Formel (IV) eingesetzt (wobei für R⁶ die gleiche Definition wie in der allgemeinen Formeln III gilt), 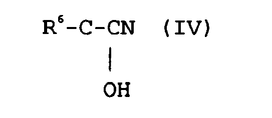 so ist der zur Konservierung/Lagerung eingesetzte Aldehyd bevorzugt der gleiche Aldehyd, der durch Umsetzung mit Blausäure oder Cyanid besagtes α-Hydroxynitril ergibt, d.h. der Rest R⁶ in den allgemeinen Formeln III und IV ist bevorzugt identisch gewählt.

Die Gesamtkonzentration an Aldehyden in dem zur Konservierung und/oder Lagerung geeignete wässrige Medium beträgt 0,1 bis 100 mM/l, bevorzugt 0,2 bis 50 mM/l, besonders bevorzugt 0,5 bis 10 mM/l, ganz besonders bevorzugt 0,3 bis 5 mM/l, am meisten bevorzugt 0,4 bis 2 mM/l.

Das wässrige Medium kann einen neutralen, schwach basischen oder schwach sauren pH-Wert annehmen. Entsprechend liegt der pH in einem Bereich von pH 6 bis 8, bevorzugt pH 6,5 bis 7, 5. Die Konservierungstemperatur liegt bevorzugt in einem Bereich von 0 bis 40°C, besonders bevorzugt 1 bis 10°C, ganz besonders bevorzugt 2 bis 5°C.

Das erfindungsgemäße Verfahren erwies sich sowohl unter Labor- als auch unter Produktionsbedingungen als außerordentlich geeignet, eine langanhaltende Enzymaktivität zu gewährleisten. Der Biokatalysator zeigt keine Deaktivierung innerhalb der beobachten 37 Tage.

"Mikroorganismus" meint im Rahmen dieser Erfindung gram-positive oder gram-negative Bakterien.

Bevorzugt sind alle Gattungen und Arten der Enterobacteriaceae oder Familien und der Ordnung Actinomycetales, ganz besonders bevorzugt die Enterobacteriaceae Arten Escherichia, Serratia, Proteus, Enterobacter, Klebsiella, Salmonella, Shigella, Edwardsielle, Citrobacter, Morganella, Providencia und Yersinia.

Ferner bevorzugt sind die Arten Pseudomonas, Burkholderia, Nocardia, Acetobacter, Gluconobacter, Corynebacterium, Brevibacterium, Bacillus, Clostridium, Cyanobacter, Staphylococcus, Aerobacter, Alcaligenes, Rhodococcus und Penicillium.

Am meisten bevorzugt sind Escherichia Arten, insbesondere Escherichia coli.

Während des erfindungsgemäßen Verfahrens kann der Mirkoorganismus in einem wachsenden, ruhenden, immobilisierten oder aufgeschlossenen Zustand vorliegen. Unter aufgeschlossenen Zellen sind beispielsweise Zellen zu verstehen, die über eine Behandlung mit beispielsweise Lösungsmitteln durchlässig gemacht worden sind, oder Zellen die über eine Enzymbehandlung, über eine mechanische Behandlung (z. B. French Press oder Ultraschall) oder über eine sonstige Methode aufgebrochen wurden. Die so erhaltenen Rohextrakte sind für das erfindungsgemässe Verfahren vorteilhaft geeignet. Auch partiell oder vollständig gereinigte Enzympräparationen können für das Verfahren verwendet werden. Ebenfalls geeignet sind immobilisierte Mikroorganismen oder Enzyme, die vorteilhaft in der Reaktion Anwendung finden können. Die Immobilisierung kann beispielsweise durch Zugabe eines oder mehrerer Acrylmonomere (wie z.B. Acrylamid, Acrylsäure, Methacrylamid, Methacrylsäure, N,N-Dimethylacrylamid, N,N-Diethylacrylamid, Dimethylaminopropyl acrylat, Dimethylaminopropylmethacrylat, Dimethylaminopropylacrylamid, Dimethylaminopropylmethacrylamid, Diethylaminopropylacrylamid oder Diethylaminopropylmethacrylamid) sowie gegebenenfalls einem oder mehrerer Vernetzern (wie z.B. Methylenbisacrylamid, Methylenbismethacrylamid, 1,2-Dihydroxyethylenbisacrylamid oder Bisacrylamidoessigsäure) zu der Zell- oder Enzympräparation und anschließende radikalische Polymerisation (initiiert durch z.B. Ammoniumpersulfate) realisiert werden.

Um einen Befall mit Fremdbakterien oder Pilzen zu verhindern können der Konservierungs/Lagerlösung gegebenenfalls geeignete Wirkstoffe mit antibakterieller oder fungizider Wirkung oder andere Salze wie z.B. Ethylenediaminetetraessigsäure zugesetzt werden.

Die in erfindungsgemäßen Verfahren zum Einsatz kommenden Mikroorganismen können - vor der Konservierung/Lagerung - in einem Medium, dass das Wachstum dieser Organismen ermöglicht, gezüchtet werden. Dieses Medium kann ein synthetisches oder ein natürliches Medium sein. Je nach Organismus werden dem Fachmann bekannte Medien verwendet. Für das Wachstum der Mikroorganismen enthalten die verwendeten Medien eine Kohlenstoffquelle, eine Stickstoffquelle, anorganische Salze und gegebenenfalls geringe Mengen an Vitamine und Spurenelemente.

Vorteilhafte Kohlenstoffquellen sind beispielsweise Polyole wie Glycerin, Zucker wie Mono-, Di- oder Polysaccharide wie Glucose, Fructose, Mannose, Xylose, Galactose, Ribose, Sorbose, Ribulose, Laktose, Maltose, Saccharose, Raffinose, Stärke oder Cellulose, komplexe Zuckerquellen wie Melasse, Zuckerphosphate wie Fructose-1,6-bisphosphat, Zuckeralkohole wie Mannit, Alkohole wie Methanol oder Ethanol, Carbonsäuren wie Citronensäure,Milchsäure oder Essigsäure, Fette wie Sojaöl oder Rapsöl, Aminosäuren wie ein Aminosäurengemisch beispielsweise sog. Casamino acids (Difco) oder einzelne Aminosäuren wie Glyzin oder Asparaginsäure oder Aminozucker, die letztgenannten können auch gleichzeitig als Stickstoffquelle verwendet werden. Besonders bevorzugt sind Polyole, insbesondere Glycerin.

Vorteilhafte Stickstoffquellen sind organische oder anorganische Stickstoffverbindungen oder Materialien, die diese Verbindungen enthalten. Beispiele sind Ammoniumsalzewie NH₄Cl oder (NH₄)₂SO₄, Nitrate Harnstoff, oder komplexe Stickstoffquellen wie Maisquellwasser, Bierhefeautolysat, Sojabohnenmehl, Weizengluten, Hefeextrakt, Pepton, Fleischextrakt, Caseinhydrolysat, Hefe oder Kartoffelprotein, die häufig auch gleichzeitig als Stickstoffquelle dienen können.

Beispiele für anorganische Salze sind die Salze von Calcium, Magnesium, Natrium, Kobalt, Molybdän, Mangan, Kalium, Zink, Kupfer und Eisen. Als Anion dieser Salze sind besonders das Chlor-, Sulfat- und Phosphation zu nennen. Ein wichtiger Faktor zur Steigerung der Produktivität im erfindungsgemässen Verfahren ist die Kontrolle der Fe²⁺⁻ oder Fe³⁺-Ionenkonzentration im Produktionsmedium.

Gegebenenfalls werden dem Nährmedium weitere Wachstumsfaktoren zugesetzt, wie beispielsweise Vitamine oder Wachstumsförderer wie Biotin, 2-KLG, Thiamin, Folsäure, Nicotinsäure, Pantothenat oder Pyridoxin, Aminosäuren wie Alanin, Cystein, Prolin, Asparaginsäure, Glutamin, Serin, Phenylalanin, Ornithin oder valin, Carbonsäuren wie Citronensäure, Ameisensäure, Pimelinsäure oder Milchsäure, oder Substanzen wie Dithiothreitol.

Das Mischungsverhältnis der genannten Nährstoffe hängt von der Art der Fermentation ab und wird im Einzelfall festgelegt. Die Mediumkomponenten können alle zu Beginn der Fermentation vorgelegt werden, nachdem sie falls erforderlich getrennt sterilisiert oder gemeinsam sterilisiert wurden, oder aber je nach Bedarf während der Fermentation kontinuierlich oder diskontinuierlich nachgegeben werden.

Die Züchtungsbedingungen werden so festgelegt, dass die Organismen so wachsen, dass die bestmöglichen Ausbeuten (zu ermitteln beispielsweise durch die Aktivitätsmenge des exprimierten rekombinaten Proteins) erreicht werden. Bevorzugte Züchtungstemperaturen liegen bei 15°C bis 40°C. Besonders vorteilhaft sind Temperaturen zwischen 25°C und 37°C. Vorzugsweise wird der pH-Wert in einem Bereich von 3 bis 9 festgehalten. Besonders vorteilhaft sind pH-Werte zwischen 5 und 8. Im allgemeinen ist eine Inkubationsdauer von wenigen Stunden bis zu einigen Tagen bevorzugt von 8 Stunden bis zu 21 Tagen, besonders bevorzugt von 4 Stunden bis 14 Tagen ausreichend.

Wie Medien vorteilhaft optimiert werden können, kann der Fachmann beispielsweise dem Lehrbuch Applied Microbiol Physiology,"A Practical Approach (Eds. PM Rhodes, PF Stanbury, IRL-Press, 1997, S.53-73, ISBN 0 19 963577 3) entnehmen.

Der Aldehyd kann zur Konservierung/Lagerung vor, während oder nach der Züchtung der Mirkoorganismen zugesetzt werden. So ist es beispielsweise möglich einen maximalen Erhalt der Aktivität zu erreichen, indem der Aldehyd dem Fermentationsansatz - ohne weitere Separation der Mikroorganismen - zugesetzt wird.

Es ist jedoch ebenfalls möglich, die so gezüchteten mirkobiellen Zellen oder Mikroorganismen beispielsweise durch Zentrifugation von dem Kulturmedium zu separieren, optional ein oder mehrmals mit einem geeigneten Puffer (wie z.B. Borat- oder Phosphatpuffer) zu waschen und anschließend zur Lagerung/Konservierung in der wässrigen Lösung, die mindestens ein Aldehyd umfassen, aufzunehmen bzw. zu bzw. resuspendieren. Die Konzentration der Mikroorganismen kann in besagter wässrigen Lösung umfassend mindestens ein Aldehyd beliebig gewählt werden.

Die Mikroorganismen, die im Rahmen der Erfindung zum Einsatz kommen weisen mindestens Nitrilase-Aktivität auf.

"Nitrilhydratase"-Aktivität meint allgemein die Eigenschaft, die Addition von einem Moläquivalent Wasser an ein Nitril zu dem entsprechenden Amid zu katalysieren:

R-CN + H₂O → R-CO-MH₂

Nitrilhydratasen umfassen bevorzugt Enzyme der EC-Klasse 4.2.1.84 (Nitrilhydratasen).

"Nitrilase"-Aktivität meint allgemein die Eigenschaft, die Addition von zwei Moläquivalenten Wasser an ein Nitril zu der entsprechenden Carbonsäure zu katalysieren:

R-CN + 2 H₂O → R-COOH + NH₃

Nitrilasen umfassen bevorzugt Enzyme der EC-Klassen 3.5.5.1 (Nitrilasen), 3.5.5.2 (Ricininnitrilase), 3.5.5.4 (Cyanoalaninnitrilasen), 3.5.5.5 (Arylacetonitrilasen), 3.5.5.6 (Bromoxynilnitrilasen), 3.5.5.7 (Aliphatische Nitrilasen).

Die Nitrilase-Aktivität der besagten Mikroorganismen Zellen kann natürlichen oder rekombinanten Ursprungs sein.

"Natürlichen Ursprungs" meint dabei, dass der Mikroorganismus als solcher - ohne eine durch menschliches Handeln bewirkte genetische Änderug - eine entsprechende Nitrilase-Aktivität aufweist. Zahlreiche derartiger Mikroorganismen sind dem Fachmann bekannt. Bevorzugt sind insbesondere Mikroorganismen der Gattungen Rhodococcus und Gordona, wie beispielsweise Rhodococcus sp. HT40-6 (FERM BP-5231), Rhodococcus rhodochrous ATCC 33278, Rhodococcus rhodochrous J-1 (FERM BP-1478), Gordona terrae MA-1 (FERM BP-4535) (JP-A-4-222591, JP-B-6-55148, EP-A1 0 707 061).

"Rekombinanten Ursprungs" meint dabei, das die DNA-Sequenz kodierend für ein Enzym mit Nitrilase -Aktivität aus einem Mikroorganismus isoliert und in einem Mikroorganismus einer anderen Art exprimiert wird. Dem Fachmann sind zahlreiche Sequenzen kodierend für Enzyme Nitrilase und/oder Nitrilhydratase-Aktivität bekannt. Beispielhaft jedoch nicht einschränkend seien zu nennen:
1. Nitrilase aus Acidovorax facilis 72W (Gavagan JE et al. (1999) Appl Microbiol Biotechnol 52:654-659)
2. Nitrilase aus Acinetobacter sp. AK 226 (Yamamoto K und Komatsu K (1991) Agric Biol Chem 55(6):1459-1466)
3. Nitrilase aus Acinetobacter sp. RFB1 (Finnegan I et al. (1991) Appl Microbiol Biotechnol 36:142-144)
4. Nitrilase aus Alcaligenes faecalis ATCC 8750 (Yamamoto K et al. (1991) Appl Environ Microbiol 57(10):3028-3032)
5. Nitrilase aus Alcaligenes faecalis JM3 (Nagasawa T et al. (1990) Eur J Biochem 194:765-772)
6. Nitrilasen (NIT1/NIT2/NIT3) aus Arabidopsis thaliana (Vorwerk S et al. (2001) Planta 212:508-516
7. NitrilaseausArthrobactersp. J-1 (BandyopadhyayAKetal. (1986) Appl Environ Microbiol 51(2):302-306)
8. Nitrilase aus Bacillus pallidus Dac521 (Cramp R et al. (1997) Microbiology 143:2313-2320)
9. Nitrilase aus Comamonas sp. NI1 (Cerbelaud E et al. (1996) Ind Chem Libr 8:189-200)
10. Nitrilase aus Comamonas testosteroni sp. (Levy-Schil S et al. (1995) Gene 161:15-20)
11. Nitrilase aus Fusarium oxysporum f. sp. melonis (Goldlust A und Bohak Z (1989) Biotechnol Appl Biochem 11:581-601)
12. Nitrilase aus Fusarium solani (Harper BH (1977) Biochem J 167:685-692)
13. Nitrilase aus Klebsiella ozaenae (McBride KE et al. (1986) Appl Environ Microbiol 52(2):325-330)
14. Nitrilase aus Pseudomonas fluoreszenz DSM 7155 (Layh N et al. (1998) J Mol Catal B: Enzym 5:467-474)
15. NitrilaseausPseudomonassp. (LayhNetal. (1992) ArchMircobiol 158:405-411)
16. Nitrilase aus Pseudomonas sp. (S1) (Dhillon J et al. (1999) Can J Microbiol 45: 811-815)
17. Nitrilase aus Pseudomonas sp. 13 (Yanase H et al. (1982) Agric Biol Chem 46:2925)
18. Nitrilase aus Rhodococcus rhodochrous J1 (Kobayashi M et al. (1989) Eur J Biochem 182:349-356)
19. Nitrilase aus Rhodococcus rhodochrous K22 (Kobayashi M et al. (1990) J Bacteriol 172(9):4807-4815)
20. Nitrilase aus Rhodococcus rhodochrous NCIB11215 (Harper BH (1985) Int J Biochem 17(6):677-683)
21. Nitrilase aus Rhodococcus rhodochrous NCIB11216 (Harper BH (1977) Biochem J 165:309-319)
22. Nitrilase aus Rhodococcus rhodochrous PA34 (Bhalla TC et al. (1992) Appl Microbiol Biotechnol 37:184-190)
23. Nitrilase aus Rhodococcus sp. ATCC 39484 (Stevenson DE et al. (1992) Biotechnol Appl Biochem 15:283-302)

In einer bevorzugen Ausführungform ist die Nitrilase beschrieben durch eine Aminosäuresequenz, die kodiert wird durch eine Nukleinsäuresequenz ausgewählt aus der Gruppe
a) einer Nukleinsäuresequenz mit der in SEQ ID NO: 1 dargestellten Sequenz,
b) Nukleinsäuresequenzen, die sich als Ergebnis des degenerierten genetischen Codes von der in SEQ ID NO: 1 dargestellten Nukleinsäuresequenz ableiten,
c) Derivate der in SEQ ID NO: 1 dargestellten Nukleinsäuresequenz, die für Polypeptide mit der in SEQ ID NO: 2 dargestellten Aminosäuresequenzen kodieren und mindestens 35% Homologie auf Aminosäureebene aufweisen und befähigt sind, mindestens ein Nitril zu der entsprechenden Carbonsäure umzusetzen.

Die Expression rekombinanter Nitrilasen/Nitrilhydrataseen kann beispielsweise mittels eines geeigneten in den Mikroorganismus eingeführten DNA-Konstruktes realisiert werden. Bevorzugt handelt es sich bei dem DNA-Konstrukt um einen Vektor. Vektoren können beispielhaft Plasmide, Cosmide oder Phagen sein. Bevorzugt ist der Vektor eine zirkuläres Plasmid, das die zu exprimierende Nukleinsäuresequenz in rekombinanter Form umfasst und zu autonomer Replikation in der prokaryotischen Wirtzelle befähigt ist. Als Vektoren seinen beispielhaft zu nennen:
a) in E.coli sind bevorzugt pQE70, pQE60 und pQE-9 (QIAGEN, Inc.); pBluescript Vektoren, Phagescript Vektoren, pNH8A, pNH16a, pNH18A, pNH46A (Stratagene Cloning Systems, Inc.); ptrc99a, pKK223-3, pKK233-3, pDR540, pRIT5 (Pharmacia Biotech, Inc.); pLG338, pACYC184, pBR322, pUC18, pUC19, pKC30, pRep4, pHS1, pHS2, pPLc236, pMBL24, pLG200, pUR290, pIN-III¹¹³-B1, λgt11 oder pBdCI,
b) in Streptomyces sind bevorzugt pIJ101, pIJ364, pIJ702 oder pIJ361,
c) in Bacillus sind bevorzugt pUB110, pC194 oder pBD214,
d) in Corynebacterium pSA77 oder pAJ667,
oder Derivate der vorstehend genannten Plasmide. Die genannten Plasmide stellen eine kleine Auswahl der möglichen Plasmide dar. Weitere Plasmide sind dem Fachmann wohl bekannt und können beispielsweise aus dem Buch Cloning Vektors (Eds. Pouwels P. H. et al. Elsevier, Amsterdam-New York-Oxford, 1985, ISBN 0 444 904018) entnommen werden.

Das DNA-Konstrukt umfaßt mindestens eine zu exprimierenden Nukleinsäuresequenz kodierend für ein Enzym mit Nitrilase-Aktivität in funktioneller Verknüpfung mit einem in den jeweilig verwendeten Mikroorganismus funktionellen Promotor.

Zahlreiche in Mikroorganismen funktionelle Promotoren sind dem Fachmann bekannt: Beispielhaft seien Promotoren wie cos-, tac-, trp-, tet-, lpp-, lac-, lacIq-, T7-, T5-, T3-, gal-, trc-, ara-, rha-, SP6-, λ-PR - oder λ-PL-Promotor zu nennen. Besonders bevorzugt ist der Promotor des Rhamnose-Operons (rha-Promotor) aus E.coli, der durch Zugabe von Rhamnose induziert werden kann.

Unter einer funktionellen Verknüpfung versteht man allgemein eine Anordnung in der eine genetische Kontrollsequenz (z.B. ein Promotor) ihre Funktion in Bezug auf die zu exprimierende Nukleinsäuresequenz ausüben kann. Funktion kann dabei beispielsweise die Kontrolle der Expression d.h. Transkription und/oder Translation der Nukleinsäuresequenz bedeuten. Kontrolle umfasst dabei beispielsweise die Initiierung, Steigerung, Steuerung oder Suppression der Expression d.h. Transkription und ggf. Translation. Unter einer funktionellen Verknüpfung versteht man zum Beispiel die sequentielle Anordnung eines Promoter, der zu exprimierenden Nukleinsäuresequenz und ggf. weiterer regulativer Elemente wie zum Beispiel einem Terminator derart, dass jedes der regulativen Elemente seine Funktion bei der Expression der Nukleinsäuresequenz erfüllen kann. Dem Fachmann sind verschiedene Wege bekannt, um zu einem der erfindungsgemässen DNA-Konstrukte zu gelangen. Die Herstellung kann mittels gängiger Rekombinations- und Klonierungstechniken realisiert werden, wie sie beispielsweise in T Maniatis, EF Fritsch und J Sambrook, Molecular Cloning: A Laboratory Manual, Cold Spring Harbor Laboratory, Cold Spring Harbor, NY (1989) sowie in TJ Silhavy, ML Berman und LW Enquist, Experiments with Gene Fusions, Cold Spring Harbor Laboratory, Cold Spring Harbor, NY (1984) und in Ausubel, FM et al., Current Protocols in Molecular Biology, Greene Publishing Assoc. and Wiley Interscience (1987) beschrieben sind.

Besagtes DNA-Konstrukt kann weitere Funktionselemente enthalten. Der Begriff der Funktionselemente ist breit zu verstehen und meint all solche Sequenzen, die einen Einfluss auf das Zustandekommen, die Vermehrung oder Funktion der erfindungsgemässen DNA-Konstrukte oder Organismen haben. Funktionselemente gewährleisten, verstärken, regulieren oder modifizieren zum Beispiel die Transkription und gegebenenfalls Translation in entsprechenden Wirtsorganismen.

Funktionselemente sind beispielsweise beschrieben bei "Goeddel; Gene Expression Technology: Methods in Enzymology 185, Academic Press, San Diego, CA (1990) " oder "Gruber and Crosby, in: Methods in Plant Molecular Biology and Biotechnolgy, CRC Press,Boca Raton, Florida, eds.:Glick and Thompson, Chapter 7, 89-108" sowie den dort aufgewiesenen Zitaten. Je nach nachstehend näher beschriebenen Wirtsorganismus oder Ausgangsorganismus, der durch Einbringen der Expressionskassetten oder Vektoren in einen genetisch veränderten oder transgenen Organismus überführt wird, eignen sich verschiedene Kontrollsequenzen.

"Genetische Kontrollsequenzen" umfassen beispielsweise die 5' -untranslatierte Region oder die nichtkodierende 3'-Region von Genen. "Genetische Kontrollsequenzen" meint ferner Sequenzen, die für Fusionsproteine bestehend aus einer Signalpeptidsequenz kodieren.

Beispielhaft aber nicht einschränkend seien zu nennen:
a) Selektionsmarker Selektionsmarker sind in der Regel erforderlich, um erfolgreich transformierte Zellen zu selektionieren und den Verlust des DNA-Konstruktes aus der Wirtszelle im Laufe der Zeit und der Zellteilungen zu verhindern. Ein solcher Verlust kann insbesondere dann auftreten, wenn das durch die zu exprimierende Nukleinsäuresequenz kodierte rekombinante Protein einen toxischen Effekt auf den prokaryontischen Organismus hat. Der mit dem Expressionskonstrukt eingebrachte selektionierbaren Marker verleiht den erfolgreich transformierten Zellen eine Resistenz gegen ein Biozid (zum Beispiel ein Antibiotikum wie zum Beispiel Ampicillin, Kanamycin oder Hygromycin) verleiht. Beispielhaft als Selektionsmarker seien genannt:
   - Amp (Ampicillin-Resistenz; b-Lactamase)
   - Cab (Carbenicillin-Resistenz)
   - Cam (Chloramphenicol-Resistenz)
   - Kan (Kanamycin-Resistenz)
   - Rif (Rifampicin-Resistenz)
   - Tet (Tetracyclin-Resistenz)
   - Zeo (Zeocin-Resistenz)
   - Spec (Spectinomycin)

Der Selektionsdruck wird durch entsprechende Mengen des Antibiotikums aufrechterhalten. Beispielhaft seien zu nennen: Ampicillin 100 mg/l, Carbenicillin 100 mg/l, Chloramphenicol 35 mg/l, Kanamycin 30 mg/l, Rifampicin 200 mg/l, Tetracyclin 12,5 mg/l, Spectinomycin 50 mg/l.

Selektionsmarker umfassen ferner solche Gene und Genprodukte, die beispielsweise durch Komplementierung einer genetischen Defizienz in der Aminosäure- oder Nukleotidsynthese, eine Selektion einer entsprechend transformierten Wirtszelle ermöglichen. Dazu werden i. a. Medien eingesetzt, die besagte Aminosäure oder den besagten Nukleotidbaustein nicht enthalten. Verschiedene derartige Systeme sind dem Fachmann bekannt. Beispielhaft seien die Defizienzen in der Tryptophan (z.B. trpC), Leucin (z.B. leuB), Histidin (z.B. hisB) Biosynthese zu nennen, wie sie z.B. im E.coli Stamm KC8 (Clontech) vorliegen. Diese Defizienzen können u.a. durch die selektionierbaren Marker TRP1, Leu2 und HIS3 komplementiert werden.
b) Transkriptionsterminatoren Der Transkriptionsterminator vermindert eine ungewollte Transkription und erhöht die Plasmid- und mRNA Stabilität.
c) Shine-Dalgarno Sequenzen Eine Shine-Dalgarno (SD) Sequenz ist erforderlich für die Initiation der Translation und ist komplementär zum 3'-Ende der 16S ribosomalen RNA. Die Effizienz der Initiation der Translation am Start-Kodon hängt von der tatsächtlichen Sequenz ab. Eine geeignete Konsensussequenz für E.coli ist beispielhaft: 5'-TAAGGAGG-3'. Sie ist ca. 4 bis 14 Nukleotide stromaufwärts des Startkodon lokalisiert, wobei das Optimum bei 8 Nukleotiden liegt. Um die Ausbildung von Sekundärstrukturen zu vermeiden (welche die Expression reduzieren können),sollte diese Region bevorzugt reich an A/T-Nukleotiden sein.
d) Startkodon
   Das Startkodon ist der Initiationpunkt der Translation. In E. coli ist ATG das meist genutzte Startkodon; GTG kann alternativ auch genutzt werden.
e) "Tags" und Fusionsproteins N- or C-terminale Fusionen der zu exprimierenden rekombinanten Proteine mit kürzeren Peptiden ("Tags") oder anderen Proteinen (Fusionpartnern) können vorteilhaft sein. Sie können beispielsweise eine verbesserte Expression, Löslichkeit, Detektierbarkeit und Aufreinigung ermöglichen. Bevorzugt werden derartige Fusuionen mit Protease-Spaltsequenzen (z.B. für Thrombin oder Faktor X) kombiniert, die eine Entfernung des "Tags" bzw. des Fusionspartners nach der Expression und Aufreinigung ermöglichen.
f) Multiple Klonierungsregionen (Multiple cloning site; MCS) erlauben und erleichtern die Insertion einer oder mehrerer Nukleinsäuresequenzen.
g) Stop-Kodon / Translationsterminatoren Von den drei möglichen Stopp-Kodons ist TAA bevorzugt, da es bei TAG und TGA unter Umständen zu einem "Durchlesen" ("Read-Through") ohne Abbruch der Translation kommen kann. Es können auch mehrere Stopp-Kodons infolge eingesetzt werden um eine verläßliche Termination zu gewährleisten.
h) Reportergene Reportergene kodieren für leicht quantifizierbare Proteine, die über Eigenfarbe oder Enzymaktivität eine Bewertung der ß-Glucuronidase, "Green Fluorescence Protein", Acetyl-, Phospo- oder Adenyltransferasen (siehe auch Schenborn E, Groskreutz D (1999) Mol Biotechnol 13(1):29-44).

Die Herstellung einer transformierten Mikroorganismus erfordert, dass die entsprechenden DNA (beispielsweise eine der erfindungsgemäßen Expressionskassetten oder vektoren) in die entsprechende Wirtszelle eingebracht wird. Für diesen Vorgang, der als Transformation bezeichnet wird, steht eine Vielzahl von Methoden zur Verfügung (siehe auch Keown et al. (1990) Methods in Enzymology 185:527-537). So kann die DNA beispielhaft direkt durch Mikroinjektion, Elektroporation oder durch Bombardierung mit DNA-beschichteten Mikropartikeln. (biolistische Verfahren mit der Genkanone "particle bombardment") eingeführt werden. Auch kann die Zelle chemisch, zum Beispiel mit Polyethylenglycol, permeabilisiert werden, so dass die DNA durch Diffusion in die Zelle gelangen kann. Die DNA kann auch durch Fusion mit anderen DNA-enthaltenden Einheiten wie Minicells, Zellen, Lysosomen oder Liposomen erfolgen. Elektroporation ist eine weitere geeignete Methode zur Einführung von DNA, bei der die Zellen reversibel durch einen elektrischen Impuls permeabilisiert werden. Als bevorzugte allgemeine Methoden seien zu nennen Calciumphosphat vermittelte Transformation, DEAE-Dextran vermittelte Transformation, kationische Lipid-vermittelte Transformation, Elektroporation, Transduktion, Infektion. Derartige Verfahren sind dem Fachmann geläufig und beispielsweise beschrieben (Davis et al.(1986) Basic Methods In Molecular Biology; Sambrook J et al. (1989) Molecular cloning: A laboratory manual, Cold Spring Harbor Laboratory Press; Ausubel FM et al. (1994) Current protocols in molecular biology, John Wiley and Sons; Glover DM et al. (1995) DNA Cloning Vol.1, IRL Press ISBN 019-963476-9).

Transformierte Zellen d.h. solche, die die eingeführte DNA enthalten, können von untransformierten selektioniert werden, wenn ein selektionierbarer Marker Bestandteil der eingeführten DNA ist. Verschiedene Selektionsmarker sind oben beschrieben.

Die eben beschriebene Zubereitung von Mikroorganismen, die mindestens eine Nitrilase-Enzymaktivität aufweisen, umfasst beispelsweise
a) mindestens einen Aldehyd mit einer Gesamtaldehydkonzentration in eimem Bereich von 0,1 bis 100 mM/l, und
b) cyanidverbindungen ausgewählt aus der Gruppe bestehend aus Nitrilen, Blausäure und Cyanidsalzen, in einer Gesamtkonzentration, die maximal 10 Mol-% der Gesamtaldehykorzentration beträgt.

In einer besonders bevorzugten Ausführungsform enthält die Zubereitung keine Zusätze an besagten Cyanidverbindungen.

Der Zubereitung von Mikroorganismen kann zur Herstellung von Nahrungs- oder Futtermitteln, Pharmazeutika oder Feinchemikalien verwendet werden Feinchemikalien meint bevorzugt Proteine, Enzyme, Vitamine, Aminosäuren, Zucker, Fettsäuren, natürliche und synthetische Geschmacks-, Aroma- und Farbstoffe.

Bei Verfahren zur Herstellung von rekombinanten Proteinen, Enzymen (bevorzugt Enzymen mit Nitrilase-Aktivität) oder anderen Feinchemikalien wie beispielweise Amiden oder Carbonsäure (bevorzugt chiraler Carbonsäuren und Amiden) kann die Zubereitung von Mikroorganismen oder einer Präparationen derselben verwendet werden.

Ein bevorzugter Gegenstand betrifft ein Verfahren zur Herstellung von Carbonsäuren und/oder Amide (bevorzugt chiraler Carbonsäuren/Amide), umfassend nachfolgende Schritte:
a) Kultivierung eines Mirkoorganismus, der mindestens eine Nitrilase-Enzymaktivität aufweist,
b) Zugabe eines mindestens eines Aldehyde, wobei die Gesamtaldehydkonzentration in einem Bereich von 0,1 bis 100 mM/l liegt, und wobei der Aldehyd während oder nach der Züchtung zugesetzt wird, wobei der Aldehyd durch die allgemeine Formel III beschrieben ist: 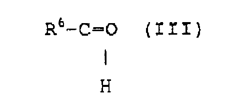 wobei R⁶ substituiertes oder unsubstituiertes, verzweigtes oder unverzweigtes C1-C10-Alkyl-, C2-C10-Alkenyl-, substituiertes oder unsubstituiertes Aryl- oder Heteroaryl- sein kann.
c) Inkontaktbringen der mit Aldehyd versetzten Zubereitung besagter Mirkoorganismen mit mindestens einem Nitril und Umsetzung des besagten Nitrils zu einer Carbonsäuren und/oder einem Amid.

In einer bevorzugten Ausführungsform umfasst die Zubereitung des Mirkoorganismus bei der Zugabe des Aldehydes Cyanidverbindungen ausgewählt aus der Gruppe bestehend aus Nitrilen, Blausäure und Cyanidsalzen, in einer Konzentration, die maximal 10 Mol-% der Gesamtaldehykonzentration beiträgt. In einer besonders bevorzugten Ausführungsform enthält besagte Zubereitung keine Zusätze an besagten Cyanidverbindungen. In einer weiterhin bevorzugten Ausführungsform kann die Zubereitung nach der Zugabe des Aldehydes (Schritt b) bis zum Einsatz in dem Reaktionsschritt c) gelagert werden. Das Verfahren kann kontinuierlich oder diskontinuierlich in batch- oder fed-batch-weise durchgeführt werden. Dabei kann sowohl die Zubereitung der Mikroorganismen als auch das racemische Nitril als Substrat nachgeführt werden.

Einzelheiten zu der Durchführung der Umsetzungen bzw. zur Aufreinigung der Produkte etc. sind beispielsweise in WO 00/23577 im Detail beschrieben. Auf die dort als beschriebenen Edukte, Produkte und Verfahrensparameter wird ausdrücklich bezug genommen.

In einer weiteren Ausführungsform, kann das Verfahren mit weiteren Verfahren zur Stabilisierung, Konservierung und/oder Lagerung von Enzymen, insbesondere Nitrilasen kombiniert werden. Derartige Verfahren können beispielhaft jedoch nicht einschränkend umfassen:
a) Zusatz von mindestens einem anorganischen Salz (bevorzugt ausgewählt aus der Gruppe bestehend aus Phosphaten, Boraten, Sulfaten, Sulfiten und Hydrochloriden) in einer Konzentration von mindestens 100 mM, bevorzugt 300 bis 700 mM.
b) Zusatz von Metallsalzen, deren Metall kation als prosthetische Gruppe der Nitrilasen fungiert (z.B. Cobaltchlorid oder Eisensulfat).
c) Zusatz von Nitrilen (z.B. Benzonitril, Isobutyronitril, Succinonitril) und/oder Amiden (s-Caprolactam, Isobutylamid, Propionamid).

### Abbildungen

### Fig.1: Lagerstabilität einer Nitrilase zur Produktion von (R)-Mandelsäure.

Wiedergegeben ist beispielhaft die Abnahme der Aktivität (A; in % der Ausgangsaktivität) von drei unabhängigen Präparationen einer E.coli exprimierten Nitrilase ohne Zusatz von Aldehyd (Vergleichsversuche) über einen Zeitraum von bis

### Abbildungen

- Fig.1:: Lagerstabilität einer Nitrilase zur Produktion von (R)-Mandelsäure. Wiedergegeben ist beispielhaft die Abnahme der Aktivität (A; in % der Ausgangsaktivität) von drei unabhängigen Präparationen einer E.coli exprimierten Nitrilase ohne Zusatz von Aldehyd (Vergleichsversuche) über einen Zeitraum von bis zu 20 Tagen (d).

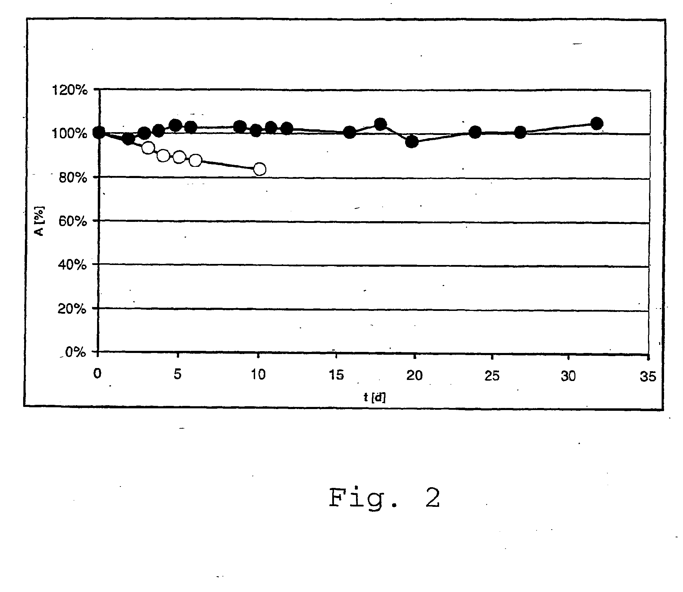

- Fig.2:: Lagerstabilität einer Nitrilase zur Produktion von (R)-Mandelsäure. Wiedergegeben ist die Abnahme der Aktivität (A; in % der Ausgangsaktivität) von Präparationen einer E.coli exprimierten Nitrilase ohne Zusatz von 2-Chlorbenzaldehyd (offene Kreise) im Vergleich zu einer ansonsten identischen Präparation mit Zusatz von 2-Chlorbenzaldehyd (geschlossene Kreise). Wiedergegeben ist ein Zeitraum (t) von bis zu 32 Tagen (d).

### Beispiele

Allgemeine Nukleinsäureverfahren wie z.B. Klonierung, Restriktionsspaltungen, Agarose-Gelelektrophorese, Verknüpfen von DNA-Fragmenten, Transformation von Mikroorganismen, Anzucht von Bakterien und Sequenzanalyse rekombinanter DNA wurden wenn nichts anderes beschrieben wurde wie bei Sambrook et al. (1989) (Cold Spring Harbor Laboratory Press: ISBN 0-87969-309-6) beschrieben durchgeführt. Die Sequenzierung rekombinanter DNA-Moleküle erfolgte mit einem Laserfluoreszenz-DNA-Sequenzierer der Firma ABI nach der Methode von Sanger (Sanger et al. (1977) Proc Natl Acad Sci USA 74:5463-5467). Fragmente resultierend aus einer Polymerase Kettenreaktion wurden zur Vermeidung von Polymerasefehlern in zu exprimierenden Konstrukten sequenziert und überprüft.

### Beispiel 1: Herstellung von Zellen mit Nitrilaseaktivität:

Die Fermentation des *Escherichia coli* (TG10 pDHE1650 pAgro4 pHSG575) erfolgte im 20 L Bioreaktor. Der Reaktor mit 10 l Arbeitsvolumen wurde mit 200 ml Vorkultur aus Schüttelkolben angeimpft. Das Vorkulturmedium entspricht dem Hauptkulturmedium.

### Medium:

40 g Glycerin 99,5 %
15 g Trypton
13,3 g Kaliumdihydrogenphosphat 5 g Hefeextrakt
4 g Di-Ammoniumhydrogenphosphat
1,7g Citronensäure
1,1 g Magnesiumsulfat Heptahydrat
1 ml Spurenelementlösung SL Korz 1000 C
0,1 ml Tego KS 911 Antischaummittel
0,062 g Eisen(II)sulfat Heptahydrat
10 mg Thiaminhydrochlorid
ad 1 l VE-Wasser

Das Medium wird 30 min bei 121°C sterilisiert. Anschließend werden 0,1 g Ampicilin steril zugesetzt

### Spurenelementlösung

| | | |
|---|---|---|
| Citronensäure*H20 | | 20 g |
| Kobalt(II)chlorid Hexachlorid | CoCl₂ * 6H₂O | 2,5 g |
| Mangan(II)chlorid Tetrachlorid | MnCl₂ * 4H₂O | 3,0 g |
| Kupfer(II)chlorid Dihydrat | CuCl₂ * 2H₂O | 0,3 g |
| Borsäure | H₃BO₃ | 0,6 g |
| Natriummolybdat Dihydrat | Na₂MoO₄ * 2H₂O | 0,5 g |
| Zinkacetat Dihydrat Zn (CH₃COO)₂ ad 1L VE- H2O | * 2H₂O | 2,6 g |

### Glycerinfeedlösung

| | |
|---|---|
| 2 L | VE-Wasser |
| 211 g | Natriumsulfat |
| 13,6 g | Eisen(II)sulfat Heptahydrat |
| 8,8 kg | Glycerin 99,5 % |
| 220 mL | Spurenelementlösung |

### Rhamnose-Feedlösung

| | |
|---|---|
| 703 g | VE-Wasser |
| 297 g | Rhamnose Monohydrat |

Die Fermentation erfolgt bei einer Temperatur von 37°C. Die Begasung wird zwischen 8-30 L/min, die Rührerdrehzahl von 400-15001/mingeregelt um einen pO₂ von 20 %nicht zu unterschreiten. Nach 1h Fermentationszeit wirddie Kultur mit IPTG (0, 15 mM) induziert. Anschließendwerden 18.5 g Rhamnosefeedlösung zugesetzt. Nach Verbrauch der vorgelegten Glycerinmenge wird kontinuierlich Glycerin zugefüttert. Nach 44 h Fermentationsdauer werden Zellsuspensionen von 50 g BTM/l und 50 bis 60 kU/l erhalten. Die Zellen werden auf 4°C abgekühlt.

### Beispiel 2: Aktivitätstest

Zu 880 µl Natrium-Kalium-Phosphatpuffer (10mM) werden 50 µl Zellsuspension pipettiert und auf 30°C temperiert. Die Reaktion wird durch Zugabe von 20 µl methanolischer Mandelonitrillösung (12 %) gestartet. Nach 10 min wird die Enzymreaktion durch Zugabe von 50 µl 1M HC gestoppt. Die Zellmasse wird abzentrifugiert und die Mandelsäurekonzentration im Überstand wird per HPLC (ODS Hypersil 100*2,0 mm, Laufmittel: 75% H3PO4 (14,8 mM) / 25% Methanol; Flußrate: 0, 5 ml/min; Injektionvolumen: 2 µl; Säulentemperatur: 40°C; Detektion: 210nm; Retentionzeit Mandelsäure: 0,9 min) gemessen.

Beispiel 3: Lagerung mit Benzaldehyd:

Die Zellsuspension wurde 14 h nach Fermentationsende mit NaOH bzw. H₂SO₄ auf einen pH 6,0, 6,6 bzw 7,2 eingestellt und anschließend mit Benzaldehyd versetzt. Die Proben wurden bei 4°C und 22°C gelagert. die Enzymaktivität wurde 0,6, 3,6 und 6,6 Tage nach Fermentationsende bestimmt.

### Lagerung bei 22°C:

| | pH-Wert | Lagerzeit | | |
|---|---|---|---|---|
| | | 0,6 d | 3,6 d | 6,6 d |
| | | Aktivität in kU/L | | |
| ohne Zusatz | 7,2 | 51,0 | 49,0 | 48,7 |
| 1 mM Benzaldehyd | 7,2 | 55,8 | 50,4 | 48,7 |
| 5 mM Benzaldehyd | 7,2 | 47,1 | 51,7 | 52,9 |
| 10 mM Benzaldehyd | 7,2 | 53,8 | 52,7 | 51,3 |
| | | | | |
| ohne Zusatz | 6,6 | 51,5 | 50,5 | 50,9 |
| 1 mM Benzaldehvd | 6,6 | 53,2 | 53,0 | 53,1 |
| 5 mM Benzaldehyd | 6,6 | 47,1 | 54,3 | 58,0 |
| 10 mM Benzaldehyd | 6,6 | 51,3 | 49,4 | 55,4 |
| | | | | |
| ohne Zusatz | 6,0 | 54,8 | 45,6 | 44,5 |
| 1 mM Benzaldehyd | 6,0 | 55,1 | 50,6 | 51,0 |
| 5 mM Benzaldehyd | 6,0 | 51,8 | 51,5 | 54,9 |
| 10 mM Benzaldehyd | 6,0 | 51,3 | 53,0 | 49,2 |

### Lagerung bei 4°C:

| | pH-Wert | Lagerzeit | | |
|---|---|---|---|---|
| | | 0,6 d | 3,6 d | 6,6 d |
| | | Aktivität in kU/L | | |
| ohne Zusatz | 7,2 | 51,0 | 48,6 | 47,8 |
| 1 mM Benzaldehyd | 7,2 | 55,8 | 46,8 | 47,5 |
| 5 mM Benzaldehyd | 7,2 | 47,1 | 48,3 | 50,7 |
| 10 mM Benzaldehyd | 7,2 | 53,8 | 51,2 | 49,2 |
| | | | | |
| ohne Zusatz | 6,6 | 51,5 | 49,5 | 45,3 |
| 1 mM Benzaldehyd | 6,6 | 53,2 | 52,3 | 52,5 |
| 5 mM Benzaldehvd | 6,6 | 47,1 | 52,0 | 55,7 |
| 10 mM Benzaldehyd | 6,6 | 51,3 | 55,5 | 51,9 |
| | | | | |
| ohne Zusatz | 6,0 | 54,8 | 42,8 | 34,9 |
| 1 mM Benzaldehyd | 6,0 | 55,1 | 49,9 | 48,3 |
| 5 mM Benzaldehyd | 6,0 | 51,8 | 52,3 | 53,0 |
| 10 mM Benzaldehyd | 6,0 | 51,3 | 51,5 | 50,2 |

### Beispiel 4: Lagerung mit CBA:

Die Zellsuspension wurde 14h nach Fermentationsende mit NaOH bzw. H₂SO₄ auf einen pH 6,0, 6,6 bzw 7,2 eingestellt und anschließend mit 2-Chlorbenzaldehydversetzt. Die Proben wurden bei 4°C und 22°C gelagert. Die Enzymaktivität wurde 0, 6, 3,6 und 6,6 Tage nach Fermentationsende bestimmt.

### Lagerung bei 22°C:

| | pH-Wert | Lagerzeit | | |
|---|---|---|---|---|
| | | 0,6 d | 3,6 d | 6,6 d |
| | | Aktivität in kU/L | | |
| ohne Zusatz | 7,2 | 51,0 | 49,0 | 48,7 |
| 1 mM 2-Chlorbenzaldehyd | 7,2 | 51,3 | 52,8 | 53,2 |
| 5 mM 2-Chlorbenzaldehvd | 7,2 | 53,3 | 51,4 | 50,1 |
| 10 mM 2-Chlorbenzaldehvd | 7,2 | 48,3 | 52,9 | 54,0 |
| | | | | |
| ohne Zusatz | 6,6 | 51,5 | 50,5 | 50,9 |
| 1 mM 2-Chlorbenzaldehyd | 6,6 | 48,8 | 55,0 | 57,2 |
| 5 mM 2-Chlorbenzaldehyd | 6,6 | 50,6 | 56,7 | 55,5 |
| 10 mM 2-Chlorbenzaldehyd | 6,6 | 47,4 | 56,2 | 58,6 |
| | | | | |
| ohne Zusatz | 6,0 | 54,8 | 45,6 | 44,5 |
| 1 mM 2-Chlorbenzaldehvd | 6,0 | 52,4 | 53,8 | 54,5 |
| 5 mM 2-Chlorbenzaldehvd | 6,0 | 52,5 | 55,0 | 59,1 |
| 10 mM 2-Chlorbenzaldehyd | 6,0 | 53,5 | 55,7 | 52,4 |

### Lagerung bei 4°C:

| | pH-Wert | Lagerzeit | | |
|---|---|---|---|---|
| | | 0,6 d | 3,6 d | 0,6 d |
| | | Aktivität in kU/L | | |
| ohne Zusatz | 7,2 | 51,0 | 48,6 | 47,8 |
| 1 mM 2-Chlorbenzaldehyd | 7,2 | 51,3 | 48,3 | 45,2 |
| 5 mM 2-Chlorbenzaldehyd | 7,2 | 53,3 | 51,2 | 48,1 |
| 10 mM 2-Chlorbenzaldehyd | 7,2 | 48,3 | 51,0 | 49,9 |
| | | | | |
| ohne Zusatz | 6,6 | 51,5 | 49,5 | 45,3 |
| 1 mM 2-Chlorbenzaldehyd | 6,6 | 48,8 | 55,1 | 54,7 |
| 5 mM 2-Chlorbenzaldehyd | 6,6 | 50,6 | 56,3 | 53,6 |
| 10 mM 2-Chlorbenzaldehyd | 6,6 | 47,4 | 55,0 | 58,5 |
| | | | | |
| ohne Zusatz | 6,0 | 54,8 | 42,8 | 34,9 |
| 1 mM 2-Chlorbenzaldehyd | 6,0 | 52,4 | 53,5 | 56,9 |
| 5 mM 2-Chlorbenzaldehyd | 6,0 | 52,5 | 55,6 | 53,8 |
| 10 mM 2-Chlorbenzaldehyd | 6,0 | 53,5 | 55,7 | 47,6 |

### Beispiel 5: Langzeitlagerung:

Die Zellsuspension wurde auf pH 6,6 gestellt und anschließend mit 1, 35 mM 2-Chlorbenzaldehyd versetzt und bei 4°C gelagert. Der Verlauf der Aktivität ist in Fig. 2 wiedergegebenen.

## Patentansprüche

1. Verfahren zur Konservierung und/oder Lagerung von Mikroorganismen, die mindestens eine Nitrilase-Enzymaktivität aufweisen, wobei die Konservierung und/oder Lagerung in einem wässrigen Medium erfolgt, welches mindestens ein Aldehyd umfasst, wobei die Gesamtaldehydkonzentration in einem Bereich von 0,1 bis 100 mM/l liegt, wobei der Aldehyd durch die allgemeine Formel III beschrieben ist: 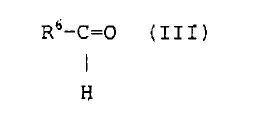 wobei R⁶ substituiertes oder unsubstituiertes, verzweigtes oder unverzweigtes C1-C10-Alkyl-, C2-C10-Alkenyl-, substituiertes oder unsubstituiertes Aryl- oder Hetaryl- sein kann.

2. Verfahren nach Anspruch 1, wobei der Konservierungsschritt durchgeführt wird, bevor die Zellen mit einem Reaktanten, dessen Reaktion durch die Zellen zu katalysieren ist, versetzt werden.

3. Verfahren nach einem der Ansprüche 1 oder 2, wobei das wässrige Medium eine Gesamtkonzentration an Cyanidverbindungen ausgewählt aus der Gruppe bestehend aus Nitrilen, Blausäure und Cyanidsalzen, enthält, die maximal 10 Mol-% der Gesamtaldehydkonzentration beträgt oder wobei das wässrige Medium keine Zusätze besagter Cyanidverbindungen enthält.

4. Verfahren zur Konservierung und/oder Lagerung von Mikroorganismen, die mindestens eine Nitrilase-Enzymaktivität aufweisen, wobei die Konservierung und/oder Lagerung in einem wässrigen Medium erfolgt, welches mindestens ein Aldehyd umfasst, wobei der Aldehyd ausgewählt ist aus der Gruppe umfassend unsubstituierten Benzaldehyd und substituierte Benzaldehyde und wobei die Gesamtaldehydkonzentration in einem Bereich von 0,1 bis 100 mM/l liegt.

5. Verfahren nach einem der Ansprüche 1 bis 4, wobei der Mikroorganismus ausgewählt ist aus den Arten der Enterobacteriaceae oder Nocardiaceae Familie.

6. Verfahren nach einem der Ansprüche 1 bis 5, wobei der Mikroorganismus ausgewählt ist aus den Gruppe der Arten Pseudomonas, Burkholderia, Nocardia, Acetobacter, Gluconobacter, Corynebacterium, Brevibacterium, Bacillus, Clostridium, Cyanobacter, Staphylococcus, Aerobacter, Alcaligenes, Rhodococcus und Penicillium.

7. Verfahren nach einem der Ansprüche 1 bis 6, wobei das Verfahren mit mindestens einem weiteren Verfahren zur Stabilisierung, Konservierung und/oder Lagerung von Enzymen kombiniert wird, wobei besagte Verfahren ausgewählt sind aus der Gruppe bestehend aus:
a) Zusatz von mindestens einem anorganischen Salz in einer Konzentration von mindestens 100 mM;
b) Zusatz von Metallsalzen, deren Metallkation als prosthetische Gruppe der Nitrilase fungiert;
c) Zusatz von Nitrilen und/oder Amiden.

## Claims

1. A method for preserving and/or storing microorganisms which exhibit at least one nitrilase enzyme activity, with the preservation and/or storage being effected in an aqueous medium which comprises at least one aldehyde, with the total aldehyde concentration being in the range from 0.1 to 100 mM/l, wherein the aldehyde is described by the formula III 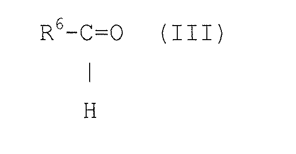 where R⁶ can be substituted or unsubstituted, branched or unbranched, C1-C10-alkyl or C2-C10-alkenyl or substituted or unsubstituted aryl or hetaryl.

2. The method according to claim 1, wherein the preservation step is carried out before the cells are treated with a reactant whose reaction is to be catalyzed by the cells.

3. The method according to either of claims 1 and 2, wherein the aqueous medium comprises a total concentration of cyanide compounds, selected from the group consisting of nitriles, hydrocyanic acid and cyanide salts, which is at most 10 mol% of the total aldehyde concentration or wherein the aqueous medium does not comprise any additions of said cyanide compounds.

4. A method for preserving and/or storing microorganisms which exhibit at least one nitrilase enzyme activity, with the preservation and/or storage being effected in an aqueous medium which comprises at least one aldehyde, wherein the aldehyde is selected from the group comprising unsubstituted benzaldehyde and substituted benzaldehydes and wherein the total aldehyde concentration is in the range from 0.1 to 100 mM/L.

5. The method according to one of claims 1 to 4, wherein the microorganism is selected from the species of the Enterobacteriaceae or Nocardiaceae family.

6. The method according to one of claims 1 to 5, wherein the microorganism is selected from the group of the species Pseudomonas, Burkholderia, Nocardia, Acetobacter, Gluconobacter, Corynebacterium, Brevibacterium, Bacillus, Clostridium, Cyanobacter, Staphylococcus, Aerobacter, Alcaligenes, Rhodococcus and Penicillium.

7. The method according to one of claims 1 to 6, wherein the method is combined with at least one further method for stabilizing, preserving and/or storing enzymes, with said methods being selected from the group consisting of:
a) adding at least one inorganic salt at a concentration of at least 100 mM;
b) adding metal salts whose metal cation functions as a nitrilase prosthetic group;
c) adding nitriles and/or amides.

## Revendications

1. Procédé pour la conservation et/ou le stockage de micro-organismes qui présentent au moins une activité enzymatique nitrilase, la conservation et/ou le stockage s'effectuant dans un milieu aqueux qui comprend au moins un aldéhyde, la concentration totale d'aldéhyde se situant dans une plage de 0,1 à 100 mM/l, l'aldéhyde étant décrit par la formule générale III suivante : 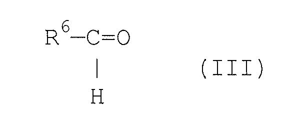 dans laquelle R⁶ peut être un groupe alkyle en C₁-C₁₀, alcényle en C₂-C₁₀, ramifié ou non ramifié, substitué ou non substitué, aryle ou hétéroaryle substitué ou non substitué.

2. Procédé selon la revendication 1, dans lequel on effectue l'étape de conservation avant d'ajouter aux cellules un partenaire réactionnel dont la réaction doit être catalysée par les cellules.

3. Procédé selon l'une quelconque des revendications 1 et 2, dans lequel le milieu aqueux présente une teneur totale en composés de type cyanure choisis dans le groupe constitué par des nitriles, l'acide cyanhydrique et des sels cyanure, qui représente au maximum 10 % en moles de la concentration totale d'aldéhyde ou dans lequel le milieu aqueux ne contient aucune addition desdits composés de type cyanure.

4. Procédé pour la conservation et/ou le stockage de micro-organismes qui présentent au moins une activité enzymatique nitrilase, dans lequel la conservation et/ou le stockage s'effectue(nt) dans un milieu aqueux qui comprend au moins un aldéhyde, dans lequel l'aldéhyde est choisi dans le groupe comprenant le benzaldéhyde non substitué et des benzaldéhydes substitués et dans lequel la concentration totale d'aldéhyde se situe dans une plage de 0,1 à 100 mM/l.

5. Procédé selon l'une quelconque des revendications 1 à 4, dans lequel le micro-organisme est choisi parmi les espèces de la famille des *Enterobacteriaceae* ou des *Nocardiaceae.*

6. Procédé selon l'une quelconque des revendications 1 à 5, dans lequel le micro-organisme est choisi dans le groupe des espèces de *Pseudomonas, Burkholderia, Nocardia, Acetobacter Glucunobacter, Corynebacterium, Brevibacterium, Bacillus, Clostridium, Cyanobacter, Staphylococcus, Aerobacter, Alcaligenes, Rhodococcus* et *Penicillium.*

7. Procédé selon l'une quelconque des revendications 1 à 6, dans lequel le procédé est combiné avec au moins un autre procédé pour la stabilisation, la conservation et/ou le stockage d'enzymes, ledit procédé étant choisi dans le groupe constitué par :
a) l'addition d'au moins un sel inorganique à une concentration d'au moins 100 mM ;
b) l'addition de sels métalliques, dont le cation métallique fonctionne en tant que groupe prosthétique de la nitrilase ;
c) l'addition de nitriles et/ou d'amides.


### SEQUENZPROTOKOLL

<110> BASF Aktiengesellschaft
<120> Verfahren zur Konservierung und/oder Lagerung von Zellen mit Nitrilase oder Nitrilhydratase-Aktivität
<130> AE20020980
<140>
   <141>
<160> 2
<170> PatentIn Ver. 2.1
<210> 1
   <211> 1071
   <212> DNA
   <213> Alcaligenes faecalis
<220>
   <221> CDS
   <222> (1)..(1068)
   <223> coding for nitrilase
<400> 1
   atg cag aca aga aaa atc gtc cgg gca gcc gcc gta cag gcc gcc tct    48
   Met Gln Thr Arg Lys Ile Val Arg Ala Ala Ala Val Gln Ala Ala Ser
    1               5                  10                  15
   ccc aac tac gat ctg gca acg ggt gtt gat aaa acc att gag ctg gct    96
   Pro Asn Tyr Asp Leu Ala Thr Gly Val Asp Lys Thr Ile Glu Leu Ala
               20                  25                  30
   cgt cag gcc cgc gat gag ggc tgt gac ctg atc gtg ttt ggt gaa acc   144
   Arg Gln Ala Arg Asp Glu Gly Cys Asp Leu Ile Val Phe Gly Glu Thr
           35                  40                  45
   tgg ctg ccc gga tat ccc ttc cac gtc tgg ctg ggc gca ccg gcc tgg   192
   Trp Leu Pro Gly Tyr Pro Phe His Val Trp Leu Gly Ala Pro Ala Trp
       50                  55                  60
   tcg ctg aaa tac agt gcc cgc tac tat gcc aac tcg ctc tcg ctg gac   240
   Ser Leu Lys Tyr Ser Ala Arg Tyr Tyr Ala Asn Ser Leu Ser Leu Asp
   65                  70                  75                  80
   agt gca gag ttt caa cgc att gcc cag gcc gca cgg acc ttg ggt att   288
   Ser Ala Glu Phe Gln Arg Ile Ala Gln Ala Ala Arg Thr Leu Gly Ile
                   85                  90                  95
   ttc atc gca ctg ggt tat agc gag cgc agc ggc ggc agc ctt tac ctg   336
   Phe Ile Ala Leu Gly Tyr Ser Glu Arg Ser Gly Gly Ser Leu Tyr Leu
               100                 105                 110
   ggc caa tgc ctg atc gac gac aag ggc gag atg ctg tgg tcg cgt cgc   384
   Gly Gln Cys Leu Ile Asp Asp Lys Gly Glu Met Leu Trp Ser Arg Arg
           115                 120                 125
   aaa ctc aaa ccc acg cat gta gag cgc acc gta ttt ggt gaa ggt tat   432
   Lys Leu Lys Pro Thr His Val Glu Arg Thr Val Phe Gly Glu Gly Tyr
       130                 135                 140
   gcc cgt gat ctg att gtg tcc gac aca gaa ctg gga cgc gtc ggt gct   480
   Ala Arg Asp Leu Ile Val Ser Asp Thr Glu Leu Gly Arg Val Gly Ala
   145                 150                 155                 160
   cta tgc tgc tgg gag cat ttg tcg ccc ttg agc aag tac gcg ctg tac   528
   Leu Cys Cys Trp Glu His Leu Ser Pro Leu Ser Lys Tyr Ala Leu Tyr
                   165                 170                 175
   tcc cag cat gaa gcc att cac att gct gcc tgg ccg tcg ttt tcg cta      576
   Ser Gln His Glu Ala Ile His Ile Ala Ala Trp Pro Ser Phe Ser Leu
               180                 185                 190
   tac agc gaa cag gcc cac gcc ctc agt gcc aag gtg aac atg gct gcc      624
   Tyr Ser Glu Gln Ala His Ala Leu Ser Ala Lys Val Asn Met Ala Ala
           195                 200                 205
   tcg caa atc tat tcg gtt gaa ggc cag tgc ttt acc atc gcc gcc agc      672
   Ser Gln Ile Tyr Ser Val Glu Gly Gln Cys Phe Thr Ile Ala Ala Ser
       210                 215                 220
   agt gtg gtc acc caa gag acg cta gac atg ctg gaa gtg ggt gaa cac      720
   Ser Val Val Thr Gln Glu Thr Leu Asp Met Leu Glu Val Gly Glu His
   225                 230                 235                 240
   aac gcc ccc ttg ctg aaa gtg ggc ggc ggc agt tcc atg att ttt gcg      768
   Asn Ala Pro Leu Leu Lys Val Gly Gly Gly Ser Ser Met Ile Phe Ala
                   245                 250                 255
   ccg gac gga cgc aca ctg gct ccc tac ctg cct cac gat gcc gag ggc      816
   Pro Asp Gly Arg Thr Leu Ala Pro Tyr Leu Pro His Asp Ala Glu Gly
               260                 265                 270
   ttg atc att gcc gat ctg aat atg gag gag att gcc ttc gcc aaa gcg      864
   Leu Ile Ile Ala Asp Leu Asn Met Glu Glu Ile Ala Phe Ala Lys Ala
           275                 280                 285
   atc aat gac ccc gta ggc cac tat tcc aaa ccc gag gcc acc cgt ctg      912
   Ile Asn Asp Pro Val Gly His Tyr Ser Lys Pro Glu Ala Thr Arg Leu
       290                 295                 300
   gtg ctg gac ttg ggg cac cga gac ccc atg act cgg gtg cac tcc aaa      960
   Val Leu Asp Leu Gly His Arg Asp Pro Met Thr Arg Val His Ser Lys
   305                 310                 315                 320
   agc gtg acc agg gaa gag gct ccc gag caa ggt gtg caa agc aag att      1008
   Ser Val Thr Arg Glu Glu Ala Pro Glu Gln Gly Val Gln Ser Lys Ile
                   325                 330                 335
   gcc tca gtc gct atc agc cat cca cag gac tcg gac aca ctg cta gtg      1056
   Ala Ser Val Ala Ile Ser His Pro Gln Asp Ser Asp Thr Leu Leu Val
               340                 345                 350
   caa gag ccg tct tga                                                  1071
   Gln Glu Pro Ser
           355
<210> 2
   <211> 356
   <212> PRT
   <213> Alcaligenes faecalis
<400> 2
   Met Gln Thr Arg Lys Ile Val Arg Ala Ala Ala Val Gln Ala Ala Ser
    1               5                  10                  15
   Pro Asn Tyr Asp Leu Ala Thr Gly Val Asp Lys Thr Ile Glu Leu Ala
               20                  25                  30
   Arg Gln Ala Arg Asp Glu Gly Cys Asp Leu Ile Val Phe Gly Glu Thr
           35                  40                  45
   Trp Leu Pro Gly Tyr Pro Phe His Val Trp Leu Gly Ala Pro Ala Trp
       50                  55                  60
   Ser Leu Lys Tyr Ser Ala Arg Tyr Tyr Ala Asn Ser Leu Ser Leu Asp
   65                  70                  75                  80
   Ser Ala Glu Phe Gln Arg Ile Ala Gln Ala Ala Arg Thr Leu Gly Ile
                   85                  90                  95
   Phe Ile Ala Leu Gly Tyr Ser Glu Arg Ser Gly Gly Ser Leu Tyr Leu
               100                 105                 110
   Gly Gln Cys Leu Ile Asp Asp Lys Gly Glu Met Leu Trp Ser Arg Arg
           115                 120                 125
   Lys Leu Lys Pro Thr His Val Glu Arg Thr Val Phe Gly Glu Gly Tyr
       130                 135                 140
   Ala Arg Asp Leu Ile Val Ser Asp Thr Glu Leu Gly Arg Val Gly Ala
   145                 150                 155                 160
   Leu Cys Cys Trp Glu His Leu Ser Pro Leu Ser Lys Tyr Ala Leu Tyr
                   165                 170                 175
   Ser Gln His Glu Ala Ile His Ile Ala Ala Trp Pro Ser Phe Ser Leu
               180                 185                 190
   Tyr Ser Glu Gln Ala His Ala Leu Ser Ala Lys Val Asn Met Ala Ala
           195                 200                 205
   Ser Gln Ile Tyr Ser Val Glu Gly Gln Cys Phe Thr Ile Ala Ala Ser
       210                 215                 220
   Ser Val Val Thr Gln Glu Thr Leu Asp Met Leu Glu Val Gly Glu His
   225                 230                 235                 240
   Asn Ala Pro Leu Leu Lys Val Gly Gly Gly Ser Ser Met Ile Phe Ala
                   245                 250                 255
   Pro Asp Gly Arg Thr Leu Ala Pro Tyr Leu Pro His Asp Ala Glu Gly
               260                 265                 270
   Leu Ile Ile Ala Asp Leu Asn Met Glu Glu Ile Ala Phe Ala Lys Ala
           275                 280                 285
   Ile Asn Asp Pro Val Gly His Tyr Ser Lys Pro Glu Ala Thr Arg Leu
       290                 295                 300
   Val Leu Asp Leu Gly His Arg Asp Pro Met Thr Arg Val His Ser Lys
   305                 310                 315                 320
   Ser Val Thr Arg Glu Glu Ala Pro Glu Gln Gly Val Gln Ser Lys Ile
                   325                 330                 335
   Ala Ser Val Ala Ile Ser His Pro Gln Asp Ser Asp Thr Leu Leu Val
               340                 345                 350
   Gln Glu Pro Ser
           355